# EUROPEAN PATENT APPLICATION

(11) **EP 2 624 489 A1**
(43) Date of publication of application: **07.08.2013**
(21) Application number: 11828126.0
(22) Date of filing: 28.09.2011
(51) Int. Cl.: H04J 13/00, H04L 27/34

(54) **HIGHER-ORDER MODULATION METHOD AND EQUIPMENT FOR USER EQUIPMENT UNDER THE STATE OF CELL FORWARD ACCESS CHANNEL**

(30) Priority: 30.09.2010 CN 201010298222
(71) Applicant: Huawei Technologies Co., Ltd., Shenzhen, Guangdong 518129 (CN)
(72) Inventor: PANG, Lingli, Shenzhen Guangdong 518129 (CN); GAO, Yongqiang, Shenzhen Guangdong 518129 (CN); ZHENG, Xiaoxiao, Shenzhen Guangdong 518129 (CN)
(74) Representative: Barth, Stephan Manuel
(86) International application number: PCT/CN2011/080291
(87) International publication number: WO 2012/041230

(57) **Abstract**

The embodiment of the current invention provides a higher-order modulation method and device for a user equipment in a cell forward channel state, the method comprising: obtaining cell capability reported by a base station; determining whether to deploy a higher-order modulation for the user equipment in the cell forward access channel state according to the cell capability and a current configuration policy configured by the wireless network controller; separately sending a higher-order modulation activation indication to the base station and the user equipment if it is determined to deploy the higher-order modulation for user equipment in the cell forward channel state. The method and device of the embodiment increase the peak rate of the user equipment in the cell forward channel state via introducing higher-order modulation to the cell forward channel state, and provide guarantee for additional subsequent service bearers in the cell forward channel state.

## Description

This application claims priority to Chinese Patent Application No. 201010298222.8, filed on Sep 30, 2010 and entitled "HIGH ORDER MODULATION CONFIGURATION METHOD AND APPARATUS FOR USER EQUIPMENT IN A CELL FORWARD ACCESS CHANNEL STATE", which is incorporated herein by reference in its entirety.

### TECHNICAL FIELD

The present invention relates to the network field, and more particular, to a high order modulation configuration method and apparatus for a user equipment (UE) in a cell forward access channel (CELL_FACH) state.

### BACKGROUND

As well known, the 64QAM (Quadrature Amplitude Modulation) can significantly improve the peak rate of downlink (DL) data. Currently, the 64QAM has been employed for UEs (user equipments) in Cell_DCH (Cell Dedicated Channel) states. The UE in the Cell_DCH state first reports its capability; then a network side RNC (Radio Network controller) indicates a NodeB (i.e., Base Station) that 64QAM is available through a RL (Radio Line) configuration request message; the NodeB determines whether to employ the 64QAM for the UE according to its own condition, and indicates the current use of the 64QAM to the RNC in a dedicated link configuration response message; if the NodeB uses the 64QAM for the UE, the RNC sends a downlink (DL) 64QAM configured indication to the UE; the UE activates the 64QAM according to the DL 64QAM configured indication.

It has been found by the inventors of this invention during the development of this invention that, with the addition of E_RACH (Enhanced Random Access Channel)/E_FACH (Enhanced Forward Access Channel) and other features, there are more and more service bearers in Cell_FACH (Cell Forward Access Channel) states, and thus improving the DL peak rate in Cell_FACH states has become a problem to be addressed. However, the 64QAM configuration methods in the prior art are merely applicable to UEs in Cell_DCH states, because there is not any dedicated signaling for UEs in Cell_FACH states currently, the 64QAM configuration cannot be realized in Cell_DCH states with existing techniques.

### SUMMARY

A high order modulation configuration method and apparatus for a user equipment (UE) in a cell forward access channel (Cell_FACH) state is provided in an embodiment of this invention, for the purpose of addressing the problem of configuring high order modulation in a Cell_FACH state and the problem of using high order modulation in a Cell_FACH state.

On one aspect, a high order modulation configuration method for a user equipment (UE) in a cell forward access channel (Cell_FACH) state is provided in an embodiment of this invention, the method being applied to a RNC (Radio Network Controller) and comprising: obtaining cell capability reported by a base station; determining whether to configure a high order modulation for the user equipment in the cell forward access channel state according to the cell capability and a configuration policy configured by a current radio network controller; and sending a high order modulation activation indication to the base station and the user equipment respectively if it is determined to configure the high order modulation for the user equipment in the cell forward access channel state.

On another aspect, a RNC (Radio Network Controller) is provided in an embodiment of this invention, the RNC comprising: an obtaining unit, configured to obtain cell capability reported by a base station; a judgment unit, configured to determine whether to configure high order modulation for a user equipment in a cell forward access channel state according to the cell capability and configuration policy configured by the current radio network controller; and a configuration unit, configured to send a high order modulation activation indication to the base station and the user equipment respectively when it is determined by the judgment unit to configure the high order modulation for the user equipment in the cell forward access channel state.

On another aspect, a high order modulation activation method for a UE in a Cell_FACH state is provided in an embodiment of this invention, the method being used in a BS and comprising: receiving a high order modulation activation indication sent from a radio network controller; determining whether a high order modulation is supported by a user equipment in a cell forward access channel state; activating the high order modulation according to a preconfigured activation means if it is determined that the high order modulation is supported by the user equipment in the cell forward access channel state, so as to transmit a modulation mode indication in a downlink data transmission according to a high speed physical downlink shared control channel mode corresponding to the high order modulation activation.

On still another aspect, a base station is provided in an embodiment of this invention, comprising: a receiving unit configured to receive a high order modulation activation indication sent from a radio network controller; a judgment unit configured to determine whether high order modulation is supported by a user equipment in a cell forward access channel state; and an activation unit configured to activate the high order modulation according to a preconfigured activation means if it is determined by the judgment unit that the high order modulation is supported by the user equipment in the cell forward access channel state, so as to transmit a modulation mode indication in downlink data transmission according to a high speed physical downlink shared control channel mode corresponding to the high order modulation activation.

On still another aspect, a high order modulation activation method for a UE in a Cell_FACH state is provided in an embodiment of this invention, the method being used in UE and comprising: receiving a high order modulation activation indication sent from a radio network controller; activating high order modulation according to a preconfigured activation means; and performing corresponding demodulation according to a data packet modulation mode corresponding to the HS-PDSCH channel.

On still another aspect, a UE is provided in an embodiment of this invention, comprising: a receiving unit configured to receive a high order modulation activation indication sent from a radio network controller; and an activation unit configured to activate high order modulation according to a preconfigured activation means, receive high speed downlink shared channel-dedicated physical control channel (HS-PDSCH) sent from a base station, and perform corresponding demodulation according to a data packet modulation mode corresponding to the HS-PDSCH channel.

With the method and apparatus provided in embodiments of this invention, the peak rate of a UE in a Cell_FACH state can be improved through introducing a high order modulation configuration in a Cell_FACH state, so as to guarantee even more services bearers in Cell_FACH states in future.

### BRIEF DESCRIPTION OF DRAWINGS

Accompanying drawings herein are provided for a further understanding of this invention, which construct part of this application, but are not limits to this invention, in which:
Fig.1 is a method flowchart according to an embodiment of this invention;
Fig.2 is a method flowchart according to another embodiment of this invention;
Fig.3 is a method flowchart corresponding to the methods shown in Fig.1 and Fig.2;
Fig.4 is another method flowchart corresponding to the methods shown in Fig.1 and Fig.2;
Fig.5 is a flowchart of configuring, activating and employing 64QAM for a UE in a Cell_FACH state at a cell level;
Fig.6 is a flowchart of configuring, activating and employing 64QAM for a UE in a Cell_FACH state at a UE level;
Fig.7 is a composition block diagram of a RNC according to an embodiment of this invention;
Fig.8 is a composition block diagram of a NodeB according to an embodiment of this invention;
Fig.9 is a composition block diagram of a UE according to an embodiment of this invention.

### DESCRIPTION OF EMBODIMENTS

In order to make the objects, technical solutions and advantages of the embodiments of this invention more apparent, the embodiments of this invention will be further described in detail in connection with embodiments and accompanying drawings. Herein, the exemplary embodiments of this invention and their description are used for explaining this invention, but are not limits of this invention.

A high order modulation configuration method and apparatus for a user equipment (UE) in a cell forward access channel (Cell_FACH) state is provided in an embodiment of this invention. In this embodiment, the high order modulation may be 64QAM modulation or a modulation higher than 64QAM, and this invention does not have limitation thereto. In this embodiment and following embodiments, the high order modulation is 64QAM as an example.

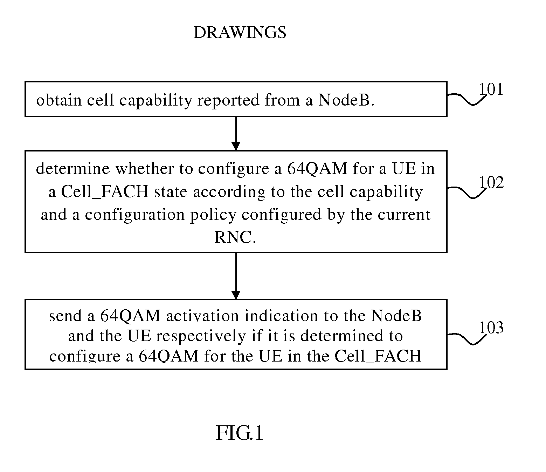

Fig.1 is a flowchart of a 64QAM configuration method for a UE in a Cell_FACH state according to an embodiment of this invention. The method is used in a RNC for configuring 64QAM for a UE in a Cell_FACH state. Referring to Fig.1, the method comprises the following steps.
Step 101: obtain cell capability reported by a NodeB.

Wherein, the NodeB can report the cell capability controlled by the NodeB through one of an audit message and a resource status indication message, so that a RNC according to this embodiment can obtain the cell capability.

Wherein, the cell capability may be an original report about whether 64QAM is supported by a cell controlled by the NodeB, or a newly added capability, such as, a 64QAM for Cell_FACH report, this embodiment is not limited thereto.
Step 102: determine whether to configure 64QAM for a UE in a Cell_FACH state according to the cell capability and the configuration policy configured by the current RNC.

Wherein, if the cell capability is that the cell supports the use of 64QAM for a UE in a Cell_FACH state, and it is permitted by the configuration policy configured by the current RNC, the RNC can determine to configure the 64QAM for the UE in the Cell_FACH state.

Wherein, the configuration policy configured by RNC refers to a policy for determining whether to configure 64QAM for a UE in a Cell_FACH state. In this embodiment, the configuration policy configured by RNC may be determining whether to configure 64QAM for a UE in a Cell_FACH state merely according to the cell capability, or determining whether to configure 64QAM for a UE in a Cell_FACH state according to the cell capability and resource occupation status, or determining whether to configure 64QAM for a UE in a Cell_FACH state according to the cell capability and a grant for that feature (a feature of configuring 64QAM for a UE in a Cell_FACH state). What described above are merely examples, and this embodiment is not limited thereto.

Wherein, the resource occupation status comprises whether the current NodeB is provided with E-FACH (Enhanced Forward Access Channel) and E-RACH (Enhanced Random Access Channel) resources, or whether the current NodeB is provided with E-FACH resources, E-RACH resources, and a HS-DPCCH (HS_DSCH (High speed Downlink Shared Channel)-Dedicated Physical Control Channel) feedback or a CQI (Channel Quality Indicator) feedback and whether the current resources are free.

Step 103: send a 64QAM activation indication to the NodeB and the UE respectively if it is determined to configure the 64QAM for the UE in the Cell_FACH state.

Wherein, the 64QAM activation indication can be sent to the UE through one of a system broadcast message and a state transition signaling. Wherein, the state transition signaling may comprise a RRC CONNECTION SETUP message, a RADIO BEARER SETUP message, a RADIO BEARER RECONFIGURATION message, a RADIO BEARER RELEASE message, a TRANSPORT CHANNEL RECONFIGURATION message, a PHYSICAL CHANNEL RECONFIGURATION message, or a CELL UPDATE ACK.

Wherein, the 64QAM activation indication is sent to the NodeB through a HS-DSCH (High Speed Downlink Shared Channel) DATA FRAME TYPE 2 (FT2). Wherein, the 64QAM activation indication in the FT2 may be an indication of the original UE capability, or an indication of a newly added capability of the UE supporting 64QAM, and this embodiment is not limited thereto.

In an embodiment, the RNC may send the NodeB a FT2 including a CFN (Connection Frame Number) indication, and not including a 64QAM activation indication or including a 64QAM deactivation indication, or send the NodeB a CELL RECONFIGURATION REQUEST message, a PHYSICAL SHARED CHANNEL RECONFIGURATION REQUEST message, or a COMMON TRANSPORT CHANNEL RECONFIGURATION REQUEST message including a 64QAM deactivation indication for a UE in a Cell_FACH state or not including a 64QAM activation indication for a UE in a Cell_FACH state if it is determined not to configure 64QAM for the UE in the Cell_FACH state; meanwhile, in order to guarantee the consistent deactivation between the UE and the NodeB, the RNC also need to send the UE RECONFIGUATION signaling that does not contain a 64QAM activation indication or contains a 64QAM deactivation indication, or send the UE a system broadcast message that does not contain a 64QAM activation indication, to cancel the 64QAM configuration for the UE in the Cell_FACH state.

With the method of this embodiment, taking a UE or a cell as a unit, the RNC can configure 64QAM for a UE that supports Cell_FACH states in a cell, so that the peak rate of the UE in the Cell_FACH state can be improved to guarantee more service bearers in Cell_FACH states in future.

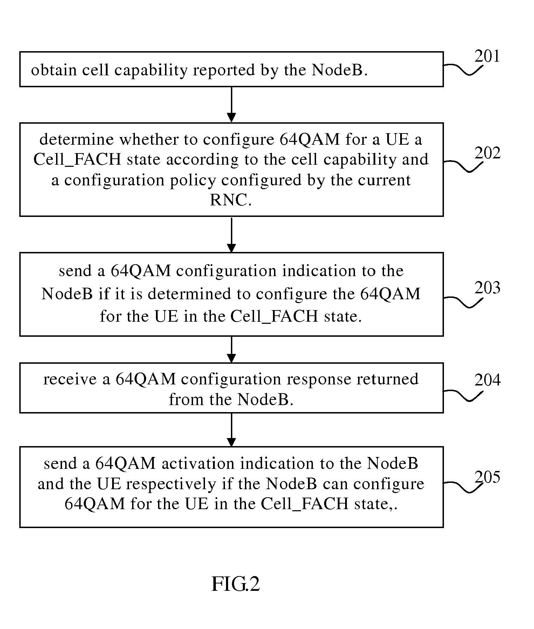

Fig.2 is a flowchart of a 64QAM configuration method for a UE in a Cell_FACH state provided in an embodiment of this invention, wherein the method is used in a RNC and differs from the method in the embodiment of Fig.1 in that, the RNC first sends a 64QAM configuration indication to the NodeB before sending a 64QAM activation indication to the NodeB and the UE, and that when the NodeB determines that it is possible to configure 64QAM for a UE in a Cell_FACH state according to its own configuration policy, the RNC sends a 64QAM activation indication to the NodeB and the UE respectively. Referring to Fig.2, the method comprises the following steps.
Step 201: obtain the cell capability reported by the NodeB.

Wherein, the method of obtaining the cell capability is the same as that of step 101, which will not be repeated herein.

Wherein, the method of obtaining a UE capability may report the capability of supporting 64QAM in UL (uplink) transmission signaling, so that the RNC of this embodiment can obtain the UE capability. Wherein, the UL transmission signaling may be any one of a UE CAPABILITY INFORMATION, a INTER RAT HANDOVER INFO, a RRC connection setup message, a cell update message, and a URA (UTRAN Registration Area, UTRAN (UMTS Terrestrial Radio Access Network, UMTS (Universal Mobile Telecommunications System) Terrestrial Radio Access Network) Registration Area) update message.
Step 202: determine whether to configure 64QAM for a UE in a Cell_FACH state according to the cell capability and a configuration policy configured by the current RNC.

Wherein, if the UE capability is that 64QAM is supported or if the cell capability is that 64QAM is supported for a UE in a Cell_FACH state, with the permission of a configuration policy configured by the current RNC, the RNC may determine to configure the 64QAM for the UE in the Cell_FACH state.

Wherein, the configuration policy configured by RNC is the same as that at step 102, which will not be repeated herein.
Step 203: send a 64QAM configuration indication to the NodeB if it is determined to configure the 64QAM for the UE in the Cell_FACH state.

Wherein, the 64QAM configuration indication can be sent to the Node B through any one of a CELL SETUP REQUEST message, a CELL RECONFIGURATION REQUEST message, a PHYSICAL SHARED CHANNEL RECONFIGURATION REQUEST message, and a COMMON TRANSPORT CHANNEL SETUP message.
Step 204: receive a 64QAM configuration response returned from the NodeB.

Wherein, if the NodeB determines that 64QAM can be configured for the UE in the Cell_FACH state according to its own configuration policy, it notifies the RNC in a response message returned to the RNC.

Wherein, corresponding to the message of step 203, the response message herein may be any one of a CELL SETUP RESPONSE message, a CELL RECONFIGURATION RESPONSE message, a PHYSICAL SHARED CHANNEL RECONFIGURATION RESPONSE message, and a COMMON TRANSPORT CHANNEL SETUP RESPONSE message.
Step 205: the RNC sends the 64QAM activation indication to the NodeB and the UE respectively if the 64QAM configuration response is that the NodeB can configure the 64QAM for the UE in the Cell_FACH state.

Wherein, the method of sending the 64QAM activation indication to the NodeB and sending the 64QAM activation indication to the UE is the same as that in the embodiment of Fig.1, which will not be repeated herein.

With the method of this embodiment, taking a UE or a cell as a unit, the RNC can configure 64QAM for a UE in a Cell_FACH state, so that the peak rate of the UE in the Cell_FACH state can be improved to guarantee more service bearers in Cell_FACH states in future.

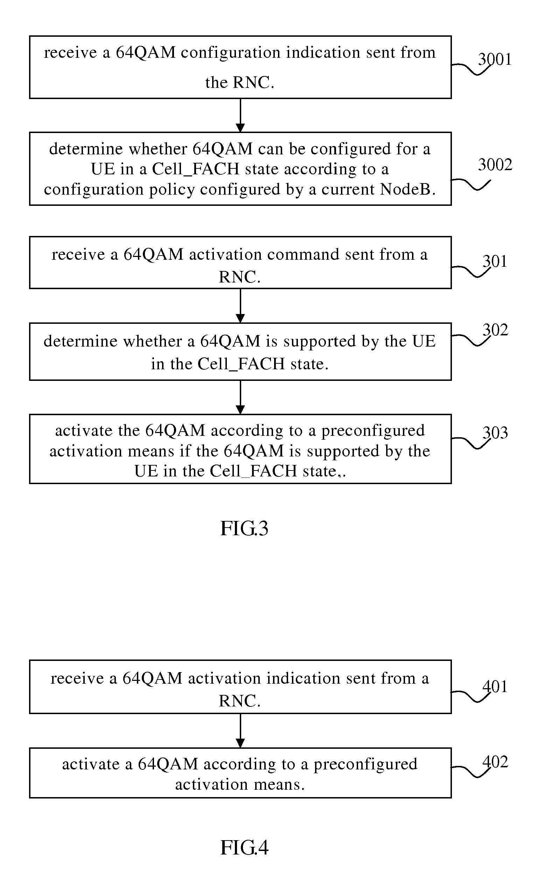

Fig.3 is a flowchart of a 64QAM activation method for a UE in a Cell_FACH state provided in an embodiment of this invention. The method is used in a NodeB, and corresponds to the methods of the embodiments of Fig.1 and Fig.2. Referring to Fig.3, the method comprises the following steps.
Step 301: receive a 64QAM activation indication sent from a RNC.

Wherein, as described at step 101 or step 201, the NodeB can first report information of supporting the use of 64QAM for a UE in a Cell_FACH state to the RNC through one of an audit message and a resource status indication message. After obtaining the cell capability reported by the NodeB, the RNC send the 64QAM activation indication to the NodeB of this embodiment according to the method of the embodiment shown in Fig.1 or the method of the embodiment shown in Fig.2.

Wherein, as described at step 103, the RNC may send the 64QAM activation indication to the NodeB of this embodiment through FT2.

Wherein, if the 64QAM activation indication is an indication of an original UE capability reporting in FT2, in the method of this embodiment, the NodeB may further determine whether the cell satisfies a condition of being provided with E-FACH and E-RACH, or being provided with E-FACH, E-RACH and a HS-DPCCH feedback or a CQI feedback, if the condition is satisfied, whether to configure the 64QAM for the UE in the Cell_FACH state is determined according to current resource occupation status.

Wherein, if the 64QAM activation indication is a newly added indication of the UE supporting the 64QAM, the method of this embodiment can directly execute the following steps.

Step 302: determine whether 64QAM is supported by the UE in the Cell_FACH state.

Wherein, whether 64QAM is supported by the UE in the Cell_FACH state is determined according to the 64QAM activation indication in the FT2. In this embodiment, since the 64QAM activation indication is determined through information on the UE supporting the 64QAM carried in the FT2, whether the 64QAM is supported can be determined according to the FT2 frame.
Step 303: the 64QAM is activated according to a preconfigured activation means if it is determined that the 64QAM is supported by the UE in the Cell_FACH state, so as to transmit a modulation mode indication in a DL data transmission according to a HS-PDSCH (High Speed Downlink Shared Control Channel) mode corresponding to the high order modulation activation.

Wherein, activating the 64QAM according to the preconfigured activation means may be activating the 64QAM directly, that is, activating the 64QAM immediately after receiving the 64QAM activation indication; or activating the 64QAM after receiving a HS-DPCCH feedback or a CQI feedback sent from the UE, that is, when the 64QAM activation indication is received, activating the 64QAM upon the reception of a HS-DPCCH feedback or a CQI feedback sent from the UE; or activating the 64QAM after sending an E-AGCH (E-DCH (Enhanced Dedicated Transport Channel) Absolute Grant Channel) to the UE, wherein the E-AGCH is used for conflict detection and comprises an E-RNTI (E-DCH Radio Network Temporary Identity) of the UE, that is to say, after receiving the 64QAM activation indication, activating the 64QAM only after sending the UE an E-AGCH for conflict detection including E-RNTI of the UE.

In this embodiment, corresponding to the method shown in Fig.2, if the RNC sends a 64QAM configuration indication to the NodeB before sending a 64QAM activation indication to the NodeB, before step 301, this embodiment may further comprise the following steps.
Step 3001: receive a 64QAM configuration indication sent from the RNC.

Wherein, the reception of the 64QAM configuration indication corresponds to the transmission of the 64QAM configuration indication at step 203, which will not be repeated herein.
Step 3002: determine whether the 64QAM can be configured for a UE in a Cell_FACH state according to a configuration policy configured by the current NodeB.

Wherein, the configuration policy configured by the current NodeB may be an algorithm of the current NodeB, or resource consumption status of the current NodeB, or whether the current NodeB is given a grant for that feature. The above description is merely illustrative, and this embodiment is not limited thereto.

Wherein, if it is determined to use the 64QAM for the UE in the Cell_FACH state, that is, the 64QAM can be configured for the UE in the Cell_FACH state, the NodeB can notify the RNC through a response message sent to the RNC. For example, the RNC can be notified that the NodeB determines to use the 64QAM for the UE that supports the Cell_FACH states through any one of a CELL SETUP RESPONSE message, a CELL RECONFIGURATION RESPONSE message, a PHYSICAL SHARED CHANNEL RECONFIGURATION RESPONSE message, and a COMMON TRANSPORT CHANNEL SETUP RESPONSE message.

In this embodiment, if one of a FT2 including a CFN indication and not including a 64QAM activation indication and a FT2 including a CFN indication and including a 64QAM deactivation indication sent from the RNC is received, or if any one of a CELL RECONFIGURATION REQUEST message, a PHYSICAL SHARED CHANNEL RECONFIGURATION REQUEST message, a COMMON TRANSPORT CHANNEL RECONFIGURATION REQUEST message one of which including a 64QAM deactivation indication for the UE in the Cell_FACH state or not including a 64QAM activation indication for the UE in the Cell_FACH state is received, it indicates that the RNC wants to cancel the 64QAM configuration of the UE in the Cell_FACH state, and the method of this embodiment further comprises: deactivating the 64QAM for the UE in the Cell_FACH state.

In this embodiment, if the NodeB directly activates the 64QAM according to the received 64QAM activation indication sent from the RNC, the NodeB cannot deactivate the 64QAM directly. If the NodeB activates the 64QAM after receiving a UL HS-DPCCH feedback or a CQI feedback from the UE, and the HS-DPCCH feedback is not bound to the E_RACH resource, the NodeB cannot deactivate the 64QAM directly either. If the NodeB activates the 64QAM after receiving a UL HS-DPCCH feedback or a CQI feedback from the UE, and the HS-DPCCH feedback is bound to the E_RACH resource, the NodeB can deactivate the 64QAM after sending an E-AGCH explicit resource release indication to the UE, or deactivate the 64QAM after receiving an implicit resource release indication with zero SI (Scheduling information) sent from the UE. If there is not a HS-DPCCH feedback, that is, the E-RACH resource has been released, the NodeB can deactivate the 64QAM after sending an E-AGCH explicit resource release indication to the UE or receiving an implicit resource release indication with zero SI (Scheduling information) sent from the UE.

With the method of this embodiment, the NodeB can activate or deactivate the 64QAM for the UE in the Cell_FACH state according to the indication of the RNC, so that the peak rate of the UE in the Cell_FACH state can be improved to guarantee more service bearers in Cell_FACH states in future.

Fig.4 is a flowchart of a 64QAM activation method for a UE in a Cell_FACH state provided in an embodiment of this invention. The method is used in the UE, and corresponds to the method of the embodiment shown in Fig.1 or Fig.2, for activating the 64QAM according to the indication of RNC. Referring to Fig.4, the method comprises the following steps.
Step 401: receive a 64QAM activation indication sent from a RNC.

Wherein, the UE can first of all report its capability of supporting 64QAM to the RNC through UL signaling, wherein the UL signaling comprises any one of: UE CAPABILITY INFORMATION, INTER RAT HANDOVER INFO, a RRC connection setup message, a cell update message, and a URA update message. The RNC obtains the UE capability, and provides the UE capability to the NodeB through a FT2 frame communicated with a NodeB, so that the NodeB can determine whether the UE supports the 64QAM.

Wherein, the RNC sends the 64QAM activation indication to the UE of this embodiment after a process according to the method of the embodiment shown in Fig.1 or Fig.2.

Wherein, as described in step 103, the 64QAM activation indication can be transmitted through one of a system broadcast message and a state transition signaling, wherein the state transition signaling comprises any one of: a RRC CONNECTION SETUP message, a RADIO BEARER SETUP message, a RADIO BEARER RECONFIGURATION message, a RADIO BEARER RELEASE message, a TRANSPORT CHANNEL RECONFIGURATION message, a PHYSICAL CHANNEL RECONFIGURATION message, and a CELL UPDATE ACK.
Step 402: activate the 64QAM according to a preconfigured activation means, so as to demodulate according to a data packet modulation mode corresponding to the HS-SCCH channel after receiving a HS-SCCH channel sent from the NodeB.

Wherein, activating the 64QAM according to the preconfigured activation means may comprise activating the 64QAM directly, that is, a UE residing in the cell and in a Cell_FACH state activates the 64QAM after receiving the 64QAM activation indication; or activating the 64QAM after sending the NodeB a HS-DPCCH feedback or a CQI feedback, that is, after receiving the 64QAM activation indication, the UE residing in the cell and in a Cell_FACH state first sends the NodeB a HS-DPCCH feedback or a CQI feedback and then activates the 64QAM; or activating the 64QAM after receiving an E-AGCH for conflict detection including E-RNTI of the UE that is sent from the NodeB, that is, after receiving the 64QAM activation indication, the UE residing in the cell and in a Cell_FACH state activates the 64QAM only after receiving the E-AGCH for conflict detection including E-RNTI of the UE that is sent from the NodeB.

In this embodiment, if ra econfiguration signaling that does not comprise a 64QAM activation indication or comprises a 64QAM deactivation indication sent from the RNC is received, or a system broadcast message that does not comprise an indication of supporting 64QAM by the UE in the Cell_FACH state sent from the RNC is received, it indicates that the RNC wants to cancel the 64QAM configuration of the UE in the Cell_FACH state, and the method of this embodiment further comprises deactivating the 64QAM.

In this embodiment, if the UE in the Cell_FACH state activates the 64QAM directly according to the received 64QAM activation indication sent from the RNC, the UE in the Cell_FACH state cannot deactivate the 64QAM directly. If the UE in the Cell_FACH state activates the 64QAM after sending a UL HS-DPCCH feedback or a CQI feedback, and the HS-DPCCH feedback is not bound to the E_RACH resource, the UE in the Cell_FACH state can use the 64QAM as long as the HS-DPCCH feedback exists and cannot deactivate the 64QAM directly. If the UE in the Cell_FACH state activates the 64QAM after sending a UL HS-DPCCH feedback or a CQI feedback, and the HS-DPCCH feedback is bound to the E_RACH resource, the UE in the Cell_FACH state can deactivate the 64QAM after receiving an E-AGCH explicit resource release indication sent from the NodeB, or deactivate the 64QAM after sending an implicit resource release indication with zero SI (Scheduling information) to the NodeB and receiving confirmation information. If there is not a HS-DPCCH feedback, that is, the E-RACH resource has been released, the UE can deactivate the 64QAM after receiving an E-AGCH explicit resource release indication sent from the NodeB or sending an implicit resource release indication with zero SI (Scheduling information) to the NodeB and receiving confirmation information.

With the method of this embodiment, the UE in the Cell_FACH state can activate or deactivate the 64QAM according to the indication of the RNC, so that the peak rate of the UE in the Cell_FACH state can be improved to guarantee more service bearers in Cell_FACH states in future.

In order to make the methods of embodiments shown in Fig.1 to Fig.4 more apparent, the methods of the embodiments will be described in further detail taking the configuring, activating and employing the 64QAM for UE in a Cell_FACH state at a cell level and at a UE level as examples respectively.

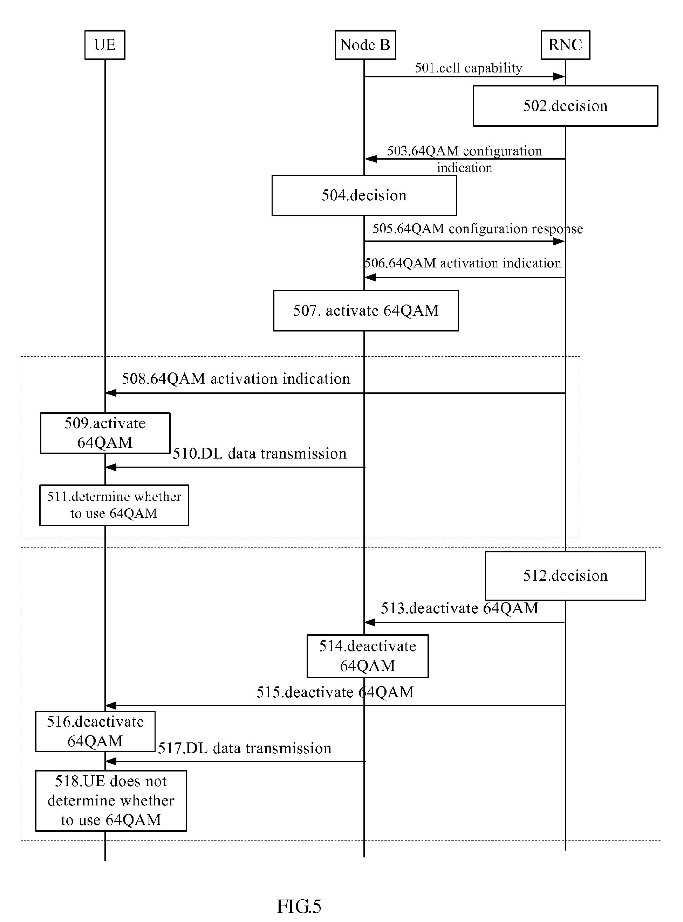

Fig.5 is a flowchart of configuring, activating and employing the 64QAM for UE in a Cell_FACH state at a cell level. In this embodiment, the network side performs the 64QAM configuration for the UE in the Cell_FACH state using common signaling. Referring to Fig.5, the flow comprises the following steps.
Step 501: a NodeB reports the cell capability to a RNC.

Wherein, the cell capability may be capability report about whether the 64QAM is supported by an original NodeB, or a newly added capability report for the support of the 64QAM in Cell_FACH states, such as, a 64QAM for Cell_FACH report.

Wherein, the NodeB can report the cell capability to the RNC through an audit message or a RESOURCE STATUS INDICATION message, that is, the above message may comprises an indication of the cell supporting the 64QAM configuration for a UE in a Cell_FACH state.

Wherein, the UE also can report the UE capability to the RNC, however, this embodiment is directed to the 64QAM configuration and activation of the UE in the Cell_FACH state in a cell level, instead of being taken into account in the configuration process, the UE capability can be determined by the NodeB in a particular data transmission.
Step 502: the RNC determines whether to configure the 64QAM for the UE in the Cell_FACH state according to the cell capability and a configuration policy configured by the current RNC.

Wherein, the method of determining whether to configure the 64QAM for the UE in the Cell_FACH state has been described in step 102, which will not be repeated herein.
Step 503: the RNC sends the NodeB a 64QAM activation indication to indicate the capability of NodeB for configuring the 64QAM if it is determined to configure the 64QAM for the UE in the Cell_FACH state.

Wherein, the 64QAM configuration indication may be transmitted through any one of a CELL SETUP REQUEST message, a CELL RECONFIGURATION REQUEST message, a PHYSICAL SHARED CHANNEL RECONFIGURATION REQUEST message, and a COMMON TRANSPORT CHANNEL SETUP REQUEST message.
Step 504: the NodeB determine whether the 64QAM can be used for the UE in the Cell_FACH state according to the 64QAM activation indication and a current configuration policy.

Wherein, the configuration policy may be any one of determining whether the 64QAM can be used for the UE in the Cell_FACH state according to an algorithm of the NodeB, or determining whether the 64QAM can be used for the UE in the Cell_FACH state according to the algorithm and resource occupation status of the NodeB, or determining whether the 64QAM can be used for the UE in the Cell_FACH state according to the algorithm, resource occupation status and whether there is a grant of the NodeB. This embodiment is not limited thereto.
Step 505: the NodeB returns a response message to the RNC.

Wherein, when it is determined that the 64QAM can be used for the UE in the Cell_FACH state, the NodeB notifies the RNC through any one of a CELL SETUP REQUEST message, a CELL RECONFIGURATION REQUEST message, a PHYSICAL SHARED CHANNEL RECONFIGURATION REQUEST message, and a COMMON TRANSPORT CHANNEL SETUP REQUEST message.
Step 506: the RNC sends a 64QAM activation indication to the NodeB.

Wherein, the 64QAM activation indication can be sent in a FT2 frame, for example, through an original UE capability indication in the FT2 frame or through a newly added 64QAM capability indication in the FT2 frame. This embodiment is not limited thereto.
Step 507: the NodeB activates the 64QAM according to the 64QAM activation indication.

Wherein, the NodeB determines whether the UE supports the 64QAM from UE capability information obtained from a FT2 (HS-DSCH DATA FRAME Type 2); when the UE supports the 64QAM, the 64QAM is activated through the following method, comprising:
1. activating the 64QAM directly, that is, the 64QAM is activated provided that the 64QAM activation indication from the RNC is received by the NodeB;
2. activating the 64QAM after receiving a UL HS-DPCCH feedback or a CQI feedback from the UE;
3. activating the 64QAM after an E_RACH resource conflict detection, that is, the NodeB activates the 64QAM after sending an E-AGCH (E-DCH Absolute Grant Channel), which is used for conflict detection and comprises E-RNTI (E-DCH Radio Network Temporary Identity) of the UE, to the UE.

Step 508: the RNC sends a 64QAM activation indication to the UE.

Wherein, the 64QAM activation indication can be sent to the UE through a system broadcast message (such as SIB5) carrying an indication that the current cell supports the 64QAM for the UE in the Cell_FACH state.

Wherein, because the activation of the 64QAM must be synchronized between the UE and the NodeB, the RNC can notify the UE through a system broadcast message that the cell supports the 64QAM for the UE in the Cell_FACH state, so that the UE can activate the 64QAM accordingly.

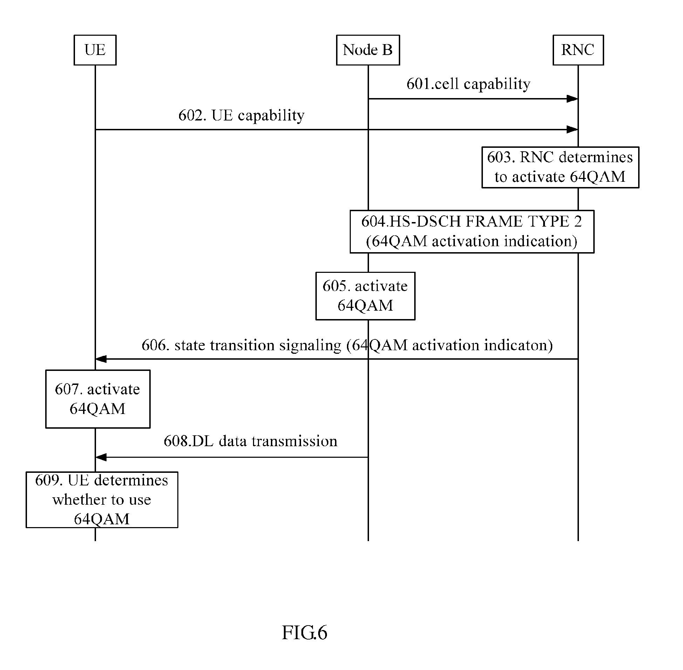

The system broadcast message above is an example, and this embodiment is not limited thereto, for example, the state transition signaling shown in Fig.6 is also possible, which will not be repeated herein.

Step 509: the UE in the current cell determines to activate the 64QAM according to the system broadcast message.

Wherein, corresponding to the three manners of activating the 64QAM by the NodeB, the UE can activate the 64QAM in the following three manners.
1. activating directly;
   the 64QAM is activated provided that the UE supports the 64QAM in a Cell_FACH state, and a SIB received from the RNC contains an indication that the 64QAM for UE in a Cell_FACH state is supported by the current cell;
2. activating the 64QAM after sending a UL HS-DPCCH feedback or a CQI feedback by the UE in the Cell_FACH state;
3. activating the 64QAM after receiving by the UE in the Cell_FACH state an E-AGCH for conflict detection and including E-RNTI of the UE.

Wherein, the 64QAM activation on the UE side and the 64QAM activation on the NodeB side must be synchronized to prevent the wrong detection of data packet by the UE. Thus, the three activation manners on the UE side correspond to the three activation manners on the NodeB side one by one, that is if one manner is adopted by the UE, the NodeB has to adopt the corresponding manner, and so on.
Step 510: after the 64QAM is activated by the NodeB, in a DL data transmission, a modulation mode indication is transmitted according to a HS-SCCH mode corresponding to the 64QAM activation.
Step 511: after the 64QAM is activated by the UE in the Cell_FACH state, in a DL data transmission, after a HS-SCCH channel is parsing, and when a modulation mode indication bit is 1, the UE further determines whether a data packet corresponding to the HS-SCCH is 16QAM or 64QAM.

In this embodiment, it may further comprise a 64QAM deactivation process. When it is determined by the RNC to deactivate the 64QAM for the cell, the flow further comprises the following steps.
Step 512: the RNC determines whether to deactivate the 64QAM for the cell.

Wherein, the RNC can determine whether to deactivate the 64QAM for the cell according to its own situation or the determination can be triggered by the NodeB. Wherein, the ways of triggering by the NodeB comprise changes in the cell capability under the control of the NodeB or resource usage changes of the cell under the control of the NodeB. The NodeB indicates such changes to the RNC in an audit process or in a resource status indication.
Step 513: the RNC indicates the NodeB to deactivate the 64QAM.

Wherein, the RNC can deactivate the 64QAM through including a 64QAM deactivation indication for a UE in a Cell_FACH state in the following messages or not including a 64QAM activation indication for a UE in a Cell_FACH state in the following messages. These messages comprise but not limited to a CELL RECONFIGURATION REQUEST message, or a PHYSICAL SHARED CHANNEL RECONFIGURATION REQUEST message, or a COMMON TRANSPORT CHANNEL RECONFIGURATION REQUEST message. Thus, the 64QAM deactivation for UE in a Cell_FACH state can be realized in a cell level, that is, taking a cell as a unit, the RNC indicates the NodeB to deactivate the 64QAM for the UE in the Cell_FACH state in the cell.
Step 514: the NodeB deactivates the 64QAM for the UE in the Cell_FACH state.

In an embodiment, the NodeB can deactivate the 64QAM according to the indication of the RNC in step 513.

In another embodiment, the NodeB can deactivate the 64QAM according to its own policy, for example, corresponding to activation manner 1, the NodeB cannot deactivate a single UE in any manner; corresponding to activation manner 2, if the HS-DPCCH feedback is not bound to the E_RACH resource, the NodeB cannot deactivate a single UE in any manner, if the HS-DPCCH feedback is bound to the E_RACH resource, the deactivation manner is the same as that corresponding to the activation manner 3; corresponding to activation manner 3, the 64QAM is deactivated when there is not a HS-DPCCH feedback, that is, the 64QAM is deactivated after E_EACH is released. Wherein, with regard to an explicit E_EACH resource release manner, the 64QAM is deactivated after NodeB sends a E_EACH for a resource release; with regard to an implicit E_EACH resource release manner, the 64QAM is deactivated after SI=0 sent from UE is received by the NodeB.
Step 515: the RNC indicates the UE to deactivate the 64QAM.

For cell level deactivation, the RNC can indication the UE to deactivate the 64QAM through changing the system broadcast message, for example, not including an indication of supporting the 64QAM in Cell_FACH states in SIB.
Step 516: the UE deactivates the 64QAM.

In an embodiment, the UE deactivates the 64QAM according to the indication of RNC in step 515.

In another embodiment, the UE can deactivate the 64QAM according to its own policy, for example, corresponding to activation manner 1, the UE cannot deactivate in any manner; corresponding to activation manner 2, if the HS-DPCCH feedback is not bound to the E_RACH resource, the UE can use the 64QAM provided there is a HS-DPCCH feedback and there is not a manner of deactivating a single UE, if the HS-DPCCH feedback is bound to the E_RACH resource, the deactivation manner is the same as that corresponding to the activation manner 3; corresponding to activation manner 3, the 64QAM is deactivated when there is not a HS-DPCCH feedback, that is, the 64QAM is deactivated after E_EACH is released. Wherein, with regard to an explicit E_EACH resource release manner, the 64QAM is deactivated after the UE receives a E_EACH resource release indication sent from the NodeB; with regard to an implicit E_EACH resource release manner, the 64QAM is deactivated after SI=0 is sent and an ACK is received by the UE.
Step 517: after deactivating the 64QAM, in a DL data transmission, the NodeB does not transmit a modulation mode indication according to a HS-SCCH mode corresponding to the 64QAM activation.
Step 518: after deactivating the 64QAM, in a DL data reception, the UE does not make the 64QAM determination any more.

Through introducing a 64QAM configuration in a Cell_FACH state, the method of this embodiment can improve the peak rate of the UE in the Cell_FACH state to guarantee more service bearers in Cell_FACH states in future.

Fig.6 is a flowchart of configuring, activating and employing the 64QAM for a UE in a Cell_FACH state at a UE level. In this embodiment, the network side configures the 64QAM for the UE in the Cell_FACH state using specific signaling, in which the same contents as Fig.5 will not be repeated. Referring to Fig.6, the flow comprises the following steps.
Step 601: a NodeB reports the cell capability to a RNC.

Wherein, the report manner is the same as that in step 501, which will not be repeated herein.
Step 602: the UE reports the UE capability to the RNC.

Wherein, the UE can report its capability of supporting the 64QAM in a UL transmission signaling, wherein the UL transmission signaling may be UE CAPABILITY INFORMATION, INTER RAT HANDOVER INFO, a RRC connection setup message, a cell update message, or a URA update message, but this embodiment is not limited thereto.
Step 603: the RNC determines whether to configure the 64QAM for the UE in the Cell_FACH state according to the cell capability and a configuration policy configured by the current RNC.

Wherein, the determination manner is the same as that in step 502, which will not be repeated herein.
Step 604: the RNC sends a 64QAM activation indication to the NodeB through a HS-DSCH DADA FREAME TYPE2.

Wherein, similar to the embodiment shown in Fig.5, in this embodiment, before sending the 64QAM activation indication to the NodeB, the RNC can at first sends a 64QAM configuration indication to the NodeB to query whether the NodeB can configure the 64QAM for the UE in the Cell_FACH state. Steps 503-505 can be referred to for particular details.
Step 605: the NodeB activates 64QAM.

Wherein, the NodeB can activate the 64QAM in the following three manners.

The NodeB activates the 64QAM for all UEs supporting the 64QAM in Cell_FACH states, that is, the NodeB activates the 64QAM if the HS-DSCH DADA FREAME TYPE2 received by the NodeB contains information of supporting the 64QAM by the UE.

The NodeB activates the 64QAM according to the 64QAM activation indication after receiving a HS-DPCCH feedback or a CQI feedback from the UE;

The NodeB activates the 64QAM according to a 64QAM activation indication in FT2 after sending an E-AGCH message for conflict detection to the UE.
Step 606: the RNC includes a 64QAM activation indication in state transition signaling sent to the UE, for example, configuration information on UE the 64QAM.

Wherein, the state transition signaling may be any existing signaling for transiting the UE to a Cell_FACH state, for example, a RRC CONNECTION SETUP message, a RADIO BEARER SETUP message, a RADIO BEARER RECONFIGURATION message, a RADIO BEARER RELEASE message, a TRANSPORT CHANNEL RECONFIGURATION message, a PHYSICAL CHANNEL RECONFIGURATION message, or a CELL UPDATE ACK.

The above is described with state transition signaling as an example, however, this embodiment is not limited thereto, for example, the system broadcast message shown in Fig.5 is also possible, which will not be repeated herein.
Step 607: the UE activates the 64QAM.

Wherein after receiving the indication information, the UE has the following three activation manners.

Activate the 64QAM after receiving the indication of RNC.

The UE in the Cell_FACH state activates the 64QAM after sending a UL HS-DPCCH feedback or a CQI feedback.

The UE in the Cell_FACH state activates the 64QAM after receiving an E-AGCH for conflict detection sent from the NodeB.
Step 608: after activating the 64QAM, the NodeB transmits a modulation mode indication in a DL data transmission according to a HS-SCCH mode corresponding to the 64QAM activation.
Step 609: after receiving a HS-SCCH channel, when the modulation mode indication bit is 1, the UE further determines whether the data packet corresponding to the HS-SCCH is in a 16QAM mode or 64QAM mode.

In this embodiment, when the RNC wants to deactivate this feature for some UE for some reason, as the embodiment shown in Fig.5, the 64QAM can be deactivated for UE in a cell in the unit of cell, or the 64QAM can be deactivated for a special UE in the unit of UE.

Wherein, for the cell level deactivation, the RNC can indication the UE to deactivate the 64QAM through changing the system broadcast message, for example, not including an indication of supporting the 64QAM in Cell_FACH states in SIB any more. The RNC can deactivate the 64QAM on the NodeB side through including a 64QAM deactivation indication for the UE in the Cell_FACH state in the following messages or not including a 64QAM activation indication for the UE in the Cell_FACH state in the following messages. These messages comprise but not limited to a CELL RECONFIGURATION REQUEST message, a PHYSICAL SHARED CHANNEL RECONFIGURATION REQUEST message, or a COMMON TRANSPORT CHANNEL RECONFIGURATION REQUEST message. Thus, the 64QAM deactivation for a UE in a Cell_FACH state can be realized in a cell level, that is, in the unit of cell, the RNC indicates the NodeB to deactivate the 64QAM for the UE in the Cell_FACH state in the cell.

For the UE level deactivation, the RNC can indication the UE to deactivate the 64QAM through reconfiguration signaling, for example, through not including a 64QAM activation indication in the reconfiguration signaling, or including a 64QAM deactivation indication in the reconfiguration signaling. The RNC can deactivate the 64QAM on the NodeB side through sending a FT2 including a CFN indication, and not including a 64QAM activation indication or including a 64QAM deactivation indication. For example, in the case that the 64QAM activation information is not stored in the context of the NodeB, the RNC only needs to not include a 64QAM indication in FT2; in the case that the 64QAM activation information is stored in the context of the NodeB, the RNC needs to include a 64QAM deactivation indication in FT2. In order to keep the synchronized deactivation on the UE side and the NodeB side, a CFN indication must be carried in the FT2 to notify the NodeB to deactivate the 64QAM at a certain CFN. Thus, the 64QAM deactivation can be realized at a UE level, that is, in the unit of UE, the RNC can indication the NodeB to deactivate the 64QAM for a specified UE in the Cell_FACH state.

Through introducing a 64QAM configuration in a Cell_FACH state, the method of this embodiment can improve the peak rate of the UE in the Cell_FACH state to guarantee more service bearers in Cell_FACH states in future.

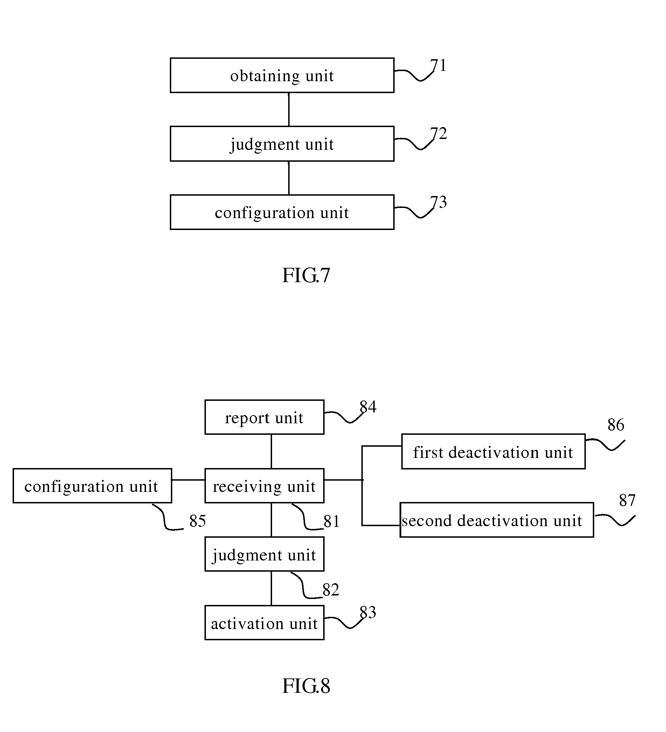

Fig.7 is a composition block diagram of a RNC provided in an embodiment of this invention; for example, a RNC in an AN (Access Network), for example, the RNC may be a RNC in a WCDMA system, or may be a BSC (Base Station Controller) in a GSM or CDMA system. The BSC may have different names according to different communication network types, and this embodiment is not limited thereto.

Referring to Fig.7, the RNC comprises an obtaining unit 71, a judgment unit 72 and a configuration unit 73, wherein:
the obtaining unit 71 is configured to obtain the cell capability reported by a BS;
the judgment unit 72 is configured to according to the cell capability obtained by the obtaining unit 71 and a configuration policy configured by the current RNC, determine whether to configure high order modulation for UE in a Cell_FACH state;
the configuration unit 73 is configured to send a high order modulation activation indication to the BS and the UE respectively when it is determined by the judgment unit 72 to configure the high order modulation for the UE in the Cell_FACH state.

In this embodiment, an example will be given, in which the BS is a NodeB and the high order modulation is 64QAM. Continuing with Fig.7, in the RNC, the obtaining unit 71 is configured to obtain the cell capability reported by the NodeB.

The judgment unit 72 is configured to determine whether to configure 64QAM for a UE in a Cell_FACH state according to the cell capability obtained by the obtaining unit 71 and a configuration policy configured by the current RNC.

The configuration unit 73 is configured to send a 64QAM activation indication to the NodeB and the UE respectively when it is determined by the judgment unit 72 to configure the 64QAM for the UE in the Cell_FACH state.

Wherein, before sending the 64QAM activation indication to the NodeB and the UE respectively, the configuration unit 73 further sends a 64QAM configuration indication to the NodeB and receives a 64QAM configuration response returned from the NodeB, wherein if the 64QAM configuration response is to configure the 64QAM for the UE in the Cell_FACH state, the 64QAM activation indication is sent to the NodeB and the UE respectively.

Wherein, the configuration unit 73 is particularly configured to send the 64QAM activation indication to the NodeB through any one of a CELL SETUP REQUEST message, a CELL RECONFIGURATION REQUEST message, a PHYSICAL SHARED CHANNEL RECONFIGURATION REQUEST message, and a COMMON TRANSPORT CHANNEL SETUP REQUEST message, and send the 64QAM activation indication to the UE through a system broadcast message.

Wherein, the configuration unit 73 is particularly configured to send the 64QAM activation indication to the UE through one of a system broadcast message and a state transition signaling. Wherein, the state transition signaling comprises a RRC CONNECTION SETUP message, a RADIO BEARER SETUP message, a RADIO BEARER RECONFIGURATION message, a RADIO BEARER RELEASE message, a TRANSPORT CHANNEL RECONFIGURATION message, a PHYSICAL CHANNEL RECONFIGURATION message, or a CELL UPDATE ACK. Wherein, the configuration unit 73 is particularly configured to send the 64QAM activation indication to the NodeB through FT2.

In an embodiment, the configuration unit 73 is further configured to, when it is determined by the judgment unit 72 not to configure the 64QAM for the UE in the Cell_FACH state anymore, send the NodeB FT2 including a CFN indication and not including a 64QAM activation indication, or send the NodeB FT2 including a CFN indication and a 64QAM deactivation indication; or send the NodeB a CELL RECONFIGURATION REQUEST message, a PHYSICAL SHARED CHANNEL RECONFIGURATION REQUEST message, a COMMON TRANSPORT CHANNEL RECONFIGURATION REQUEST message including a 64QAM deactivation indication for the UE in the Cell_FACH state, and send the UE a system broadcast message not including the 64QAM activation indication; or send the NodeB a CELL RECONFIGURATION REQUEST message, a PHYSICAL SHARED CHANNEL RECONFIGURATION REQUEST message, a COMMON TRANSPORT CHANNEL RECONFIGURATION REQUEST message not including a 64QAM activation indication for the UE in the Cell_FACH state, and send the UE a system broadcast message not including the 64QAM activation indication.

In another embodiment, the configuration unit 73 is further configured to, when it is determined by the judgment unit 72 not to configure the 64QAM for the UE in the Cell_FACH state anymore, send the UE reconfiguration signaling not including the 64QAM activation indication, or send the UE reconfiguration signaling including a 64QAM deactivation indication; or send the UE a system broadcast message not including the 64QAM activation indication.

The composition parts of the RNC of this embodiment are configured to realize the various steps of the methods shown in Fig.1 and Fig.2, since the various steps have been described in detail in the embodiments shown in Fig.1 and Fig.2, they will not be repeated herein.

With the RNC of this embodiment, the RNC can configure the 64QAM for UE supporting a Cell_FACH state in a cell in the unit of cell; the RNC can further configure the 64QAM for a UE in a Cell_FACH state in the unit of UE, so that the peak rate of the UE in the Cell_FACH state can be improved to guarantee even more services bearers in Cell_FACH states in future.

Fig.8 is a composition block diagram of a BS provided in an embodiment of this invention; for example, a BS in an AN (Access Network), for example, the BS may be a NodeB in a WCDMA system, or may be a BS (BTS, Base Transceiver Station) in a GSM or CDMA system, or a eNodeB in a LET network. The BS may have different names according to different communication network types, and this embodiment is not limited thereto.

Referring to Fig.8, the BS comprises a receiving unit 81, a judgment unit 82 and an activation unit 83, wherein:
the receiving unit 81 is configured to receive a high order modulation activation indication sent from a RNC;
the judgment unit 82 is configured to determine whether high order modulation is supported by a UE in a Cell_FACH state;
the activation unit 83 is configured to, when the judgment unit 82 determines that high order modulation is supported by the UE in the Cell_FACH state, activate high order modulation according to a preconfigured activation means, so as to transmit a modulation mode indication in a DL data transmission according to a high speed physical downlink shared control channel (HS-PDSCH) mode corresponding to the high order modulation activation.

In this embodiment, an example will be given, in which the BS is a NodeB and the high order modulation is 64QAM. Continuing with Fig.8, in the BS, the receiving unit 81 is configured to receive a 64QAM activation indication sent from a RNC;
the judgment unit 82 is configured to determine whether the 64QAM is supported by a UE in a Cell_FACH state;
the activation unit 83 is configured to, when the judgment unit 82 determines that the 64QAM is supported by the UE in the Cell_FACH state, activate the 64QAM according to a preconfigured activation means, so as to transmit a modulation mode indication in a DL data transmission according to a HS-PDSCH mode corresponding to the 64QAM activation.

In an embodiment, the NodeB further comprises:
a report unit 84 configured to report capability information of supporting the configuration of the 64QAM for a UE in a Cell_FACH state to the RNC through an audit message or a resource status indication message.

In an embodiment, the NodeB further comprises:
a configuration unit 85 configured to, before the receiving unit 81 receives the 64QAM activation indication sent from the RNC, when a 64QAM configuration indication sent from the RNC is received, determine whether to configure the 64QAM for UE supporting a Cell_FACH state according to a configuration policy configured by the current NodeB.

Wherein, the configuration unit 85 is particularly configured to when it is determined to configure the 64QAM for the UE in the Cell_FACH state, notify the RNC that the current NodeB determines to use the 64QAM for the UE in the Cell_FACH state through a CELL SETUP RESPONSE message, a CELL RECONFIGURATION RESPONSE message, a PHYSICAL SHARED CHANNEL RECONFIGURATION RESPONSE message, or a COMMON TRANSPORT CHANNEL SETUP RESPONSE message.

In an embodiment, the activation unit 83 is particularly configured to activate the 64QAM directly; or activate the 64QAM after receiving a HS-DPCCH feedback or a CQI feedback sent from the UE; or activate the 64QAM after sending an to the UE.

In an embodiment, the NodeB further comprises:
a first deactivation unit 86 configured to deactivate the 64QAM for a UE in a Cell_FACH state when receiving by the receiving unit 81 a FT2 including a CFN indication and not including a 64QAM activation indication or a FT2 including a CFN indication and including a 64QAM deactivation indication sent from the RNC; or any one of a CELL RECONFIGURATION REQUEST message, a PHYSICAL SHARED CHANNEL RECONFIGURATION REQUEST message, a COMMON TRANSPORT CHANNEL RECONFIGURATION REQUEST message any one of which including a 64QAM deactivation indication for the UE in the Cell_FACH state or not including a 64QAM activation indication for the UE in the Cell_FACH state sent from the RNC.

In another embodiment, the NodeB further comprises:
a second deactivation unit 87 particularly configured to deactivate the 64QAM after activating the 64QAM is activated by the activation unit according to the preconfigured activation means, and an E-AGCH explicit resource release indication is sent to the UE; or deactivate the 64QAM after receiving by the receiving unit 81 an implicit resource release indication having zero scheduling information sent from the UE.

The composition parts of the NodeB of this embodiment are configured to realize the various steps of the method shown in Fig.3, since the various steps have been described in detail in the embodiments shown in Fig.3, they will not be repeated herein.

With the NodeB of this embodiment, the NodeB can activate or deactivate the 64QAM for the UE in the Cell_FACH state according to the indication of RNC, so that the peak rate of the UE in the Cell_FACH state can be improved to guarantee even more services bearers in Cell_FACH states in future.

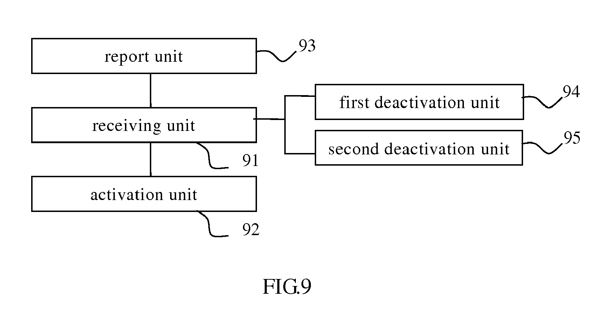

Fig.9 is a composition block diagram of a UE provided in an embodiment of this invention. Referring to Fig.9, the UE comprises a receiving unit 91 and an activation unit 92, wherein,
the receiving unit 91 is configured to receive a high order modulation indication sent from a RNC;
the activation unit 92 is configured to activate high order modulation according to a preconfigured activation means, as to after receiving a high speed physical downlink shared control channel (HS-PDSCH) channel sent from a BS, demodulate according to a data packet modulation mode corresponding to the HS-PDSCH channel.

In this embodiment, an example will be given, in which the BS is a NodeB and the high order modulation is 64QAM. Continuing with Fig.9, in the RNC, the receiving unit 91 is configured to receive a 64QAM activation indication sent from a RNC;
the activation unit 92 is configured to activate the 64QAM according to a preconfigured activation means, so as to after receiving a HS-PDSCH channel sent from a NodeB, demodulate according to a data packet modulation mode corresponding to the HS-PDSCH channel.

In an embodiment, the UE further comprises:
a report unit 93 configured to report capability information of supporting the 64QAM to the RNC through UL transmission signaling, wherein the UL transmission signaling comprises: a UE capability message, INTRA CELL HANDOVER message, a RRC CONNECTION SETUP message, a CELL UPDATE message, a URA UPDATE message.

In an embodiment, the activation unit 92 is particularly configured to activate the 64QAM directly; or activate the 64QAM after sending a HS-DPCCH feedback or a CQI feedback to the NodeB; or activate the 64QAM after receiving an E-AGCH sent from the NodeB.

In an embodiment, the UE further comprises:
a first deactivation unit 94 configured to deactivate the 64QAM after the receiving unit 91 receives reconfiguration signaling not including a 64QAM activation indication sent from the RNC; or after receiving reconfiguration signaling including a 64QAM deactivation indication sent from the RNC; or after receiving a system broadcast message not including an indication of supporting 64QAM in a Cell_FACH state sent from the RNC.

In another embodiment, the UE further comprises:
a second deactivation unit 95 particularly configured to deactivate the 64QAM after the 64QAM is activated by the activation unit according to a preconfigured activation means and the receiving unit 91 receives an E-AGCH explicit resource release indication sent from the NodeB; or deactivate the 64QAM after sending a implicit resource release indication with zero scheduling information to the NodeB and receiving an ACK.

The composition parts of the UE of this embodiment are configured to realize the various steps of the method shown in Fig.4, since the various steps have been described in detail in the embodiments shown in Fig.4, they will not be repeated herein.

With the UE of this embodiment, the UE in the Cell_FACH state can activate or deactivate the 64QAM according to the indication of RNC, so that the peak rate of the UE in the Cell_FACH state can be improved to guarantee even more services bearers in Cell_FACH states in future.

It can be clearly understood by persons skilled in the art that, for the purpose of convenient and brief description, for a detailed working process of the foregoing system, device and unit, reference may be made to the corresponding process in the method embodiments, and the details will not be described herein again.

In several embodiments provided in the current application, it should be understood that the disclosed system, device, and method may be implemented in other ways. For example, the described embodiments of the devices are merely exemplary. For example, the unit division is merely logical function division and there can be other divisions in actual implementation. For example, multiple units or components can be combined or integrated into another system, or some features can be ignored or not performed. Furthermore, the shown or discussed coupling or direct coupling or communication connection may be accomplished through indirect coupling or communication connection between some interfaces, devices or units in an electrical form, a mechanical form, or in other forms.

Units described as separate components may be or may not be physically separated. Components shown as units may be or may not be physical units, that is, may be integrated or distributed to multiple network units. Some or all of the units may be selected to achieve the objective of the solution of the embodiment according to actual requirements.

In addition, various functional units according to each embodiment of the current invention may be integrated in one processing module or may exist as separate physical units, or two or more units may also be integrated in one unit. The integrated module may be implemented through hardware, or may also be implemented in a form of a software functional module.

When the integrated module is implemented in the form of the software functional module and sold or used as a separate product, the integrated module may be stored in a computer readable storage medium. Therefore, the technical solution of the current invention or the part that makes contributions to the prior art can be substantially embodied in the form of a software product. The computer software product is stored in a storage medium, and contains several instructions to instruct computer equipment (such as, a personal computer, a server, or network equipment) to perform all or part of steps of the method as described in the embodiments of the current invention. The mentioned storage medium includes various media capable of storing program codes, such as, a flash disk, a mobile hard disk, a Read-Only Memory (ROM), a Random Access Memory (RAM), a magnetic disk or an optical disk.

The above are merely exemplary embodiments of the current invention, but the protection scope of the current invention is not limited herein. Any change or replacement that can be easily figured out by persons skilled in the art within the technical scope disclosed by the current invention shall be covered by the protection scope of the current invention. Therefore, the protection scope of the current invention shall be defined by the claims.

## Claims

1. A high order modulation configuration method for a user equipment in a cell forward access channel state, **characterized in that** the method comprises:
obtaining cell capability reported by a base station;
determining whether to configure high order modulation for the user equipment in the cell forward access channel state according to the cell capability and a configuration policy configured by a current radio network controller; and
sending a high order modulation activation indication to the base station and the user equipment respectively if it is determined to configure the high order modulation for the user equipment in the cell forward access channel state.

2. The method according to claim 1, **characterized in that** before sending the high order modulation activation indication to the base station and the user equipment respectively, the method further comprises:
sending a high order modulation configuration indication to the base station; and
receiving a high order modulation configuration response returned from the base station, wherein if the high order modulation configuration response represents that it is determined to configure the high order modulation for the user equipment in the cell forward access channel state, sending the high order modulation activation indication to the base station and the user equipment respectively.

3. The method according to claim 2, **characterized in that** the sending the high order modulation configuration indication to the base station particularly comprises:
sending the high order modulation configuration indication to the base station through any one of a cell setup request message, a cell reconfiguration request message, a physical shared channel reconfiguration request message, and a common transport channel setup message.

4. The method according to claim 1, **characterized in that** the sending the high order modulation activation indication to the user equipment particularly comprises:
sending the high order modulation activation indication to the user equipment through one of a system broadcast message and state transition signaling.

5. The method according to claim 1, **characterized in that** the sending the high order modulation activation indication to the base station particularly comprises:
sending the high order modulation activation indication to the base station through high speed downlink shared channel data frame type 2.

6. The method according to claim 1, **characterized in that** if it is determined not to configure the high order modulation for the user equipment in the cell forward access channel state any more, the method further comprises:
sending the base station a high speed downlink shared channel data frame type 2 including a connection frame number indication and not including the high order modulation activation indication; or
sending the base station a high speed downlink shared channel data frame type 2 including a connection frame number indication and including a high order modulation deactivation indication; or
sending the base station any one of a cell reconfiguration request message, a physical shared channel reconfiguration request message, and a common transport channel reconfiguration request message any one which including a high order modulation deactivation indication for the user equipment in the cell forward access channel state; or
sending the base station any one of a cell reconfiguration request message, a physical shared channel reconfiguration request message, and a common transport channel reconfiguration request message any one which not including the high order modulation activation indication for the user equipment in the cell forward access channel state.

7. The method according to claim 1, **characterized in that** if it is determined not to configure the high order modulation for the user equipment in the cell forward access channel state any more, the method further comprises:
sending reconfiguration signaling that does not contain the high order modulation activation indication to the user equipment; or
sending reconfiguration signaling that contains a high order modulation deactivation indication to the user equipment; or
sending a system broadcast message that does not contain the high order modulation activation indication to the user equipment.

8. A radio network controller, **characterized in** comprising:
an obtaining unit, configured to obtain cell capability reported by a base station;
a judgment unit, configured to determine whether to configure high order modulation for a user equipment in a cell forward access channel state according to the cell capability and a configuration policy configured by the current radio network controller; and
a configuration unit, configured to send a high order modulation activation indication to the base station and the user equipment respectively when it is determined by the judgment unit to configure the high order modulation for the user equipment in the cell forward access channel state.

9. The radio network controller according to claim 8, **characterized in that**, the configuration unit is further configured to, before sending the high order modulation activation command to the base station and the user equipment, send a high order modulation configuration indication to the base station and receive a high order modulation configuration response returned from the base station, wherein if the high order modulation configuration response represents to configure high order modulation for the user equipment in the cell forward access channel state, the high order modulation activation indication is sent to the base station and the user equipment respectively.

10. The radio network controller according to claim 9, **characterized in that** the configuration unit is particularly configured to send the high order modulation configuration indication to the base station through any one of a cell setup request message, a cell reconfiguration request message, a physical shared channel reconfiguration request message, and a common transport channel setup message.

11. The radio network controller according to claim 8, **characterized in that** the configuration unit is particularly configured to: send the high order modulation activation indication to the user equipment through one of a system broadcast message and state transition signaling.

12. The radio network controller according to claim 8, **characterized in that** the configuration unit is particularly configured to send the high order modulation activation indication to the base station through a high speed downlink shared channel data frame type 2.

13. The radio network controller according to claim 8, **characterized in that** the configuration unit is further configured to, when it is determined by the judgment unit not to configure the high order modulation for the user equipment in the cell forward access channel state anymore,
send the base station a high speed downlink shared channel data frame type 2 including a connection frame number indication, and not including the high order modulation activation indication; or
send the base station a high speed downlink shared channel data frame type 2 including a connection frame number indication, and including a high order modulation deactivation indication; or
send the base station any one of a cell reconfiguration request message, a physical shared channel reconfiguration request message, and a common transport channel reconfiguration request message any one which including a high order modulation deactivation indication for the user equipment in the cell forward access channel state; and sending the user equipment a system broadcast message not including the high order modulation activation indication; or
send the base station any one of a cell reconfiguration request message, a physical shared channel reconfiguration request message, and a common transport channel reconfiguration request message any one which not including the high order modulation activation indication for the user equipment in the cell forward access channel state and sending the user equipment a system broadcast message not including the high order modulation activation indication.

14. The radio network controller according to claim 8, **characterized in that** the configuration unit is further configured to, when it is determined by the judgment unit not to configure the high order modulation for the user equipment in the cell forward access channel state anymore,
send reconfiguration signaling that does not contain the high order modulation activation indication to the user equipment; or
send reconfiguration signaling that contains a high order modulation deactivation indication to the user equipment; or
send a system broadcast message that does not contain the high order modulation activation indication to the user equipment.

15. A high order modulation activation method for user equipment in a cell forward access channel state, the method being using in a base station, **characterized in** comprising:
receiving a high order modulation activation indication sent from a radio network controller;
determining whether a high order modulation is supported by a user equipment in a cell forward access channel state; and
activating the high order modulation according to a preconfigured activation means if it is determined that the high order modulation is supported by the user equipment in the cell forward access channel state, so as to transmit a modulation mode indication in a downlink data transmission according to a high speed physical downlink shared control channel mode corresponding to the high order modulation activation.

16. The method according to claim 15, **characterized in that** before receiving the high order modulation activation indication sent from the radio network controller, the method further comprises:
reporting capability information of supporting configuration of high order modulation for user equipment in the cell forward access channel state to the radio network controller through one of an audit message and a resource status indication message.

17. The method according to claim 15, **characterized in that** before receiving the high order modulation activation indication sent from the radio network controller, the method further comprises:
receiving a high order modulation configuration indication sent from the radio network controller; and
determining whether to configure the high order modulation for the user equipment supporting the cell forward access channel state according to a configuration policy configured by the current base station.

18. The method according to claim 17, **characterized in that** if it is determined to configure the high order modulation for the user equipment in the cell forward access channel state, the method further comprises:
notifying the radio network controller that the base station currently determines to configure the high order modulation for the user equipment in the cell forward access channel state through any one of a cell setup response message, a cell reconfiguration response message, a physical shared channel reconfiguration response message, and a common transport channel setup response message.

19. The method according to claim 15, **characterized in that** the activating the high order modulation according to the preconfigured activation means comprises:
activating the high order modulation directly; or
activating the high order modulation after receiving one of a high speed downlink shared channel-dedicated physical control channel (HS-DPCCH) feedback and a channel quality indicator (CQI) feedback sent from the user equipment; or
activating the high order modulation after sending an enhanced dedicated transport channel absolute grant channel (E-AGCH) for conflict detection to the user equipment.

20. The method according to claim 15, **characterized in that**, the method further comprises:
deactivating the high order modulation for the user equipment in the cell forward access channel state if the base station receives a high speed downlink shared channel data frame type 2 including a connection frame number indication and not including the high order modulation activation indication sent from the radio network controller; or
deactivating the high order modulation for the user equipment in the cell forward access channel state if the base station receives a high speed downlink shared channel data frame type 2 including a connection frame number indication and including a high order modulation deactivation indication sent from the radio network controller; or
deactivating the high order modulation for the user equipment in the cell forward access channel state if the base station receives a cell reconfiguration request message including a high order modulation deactivation indication for the user equipment in the cell forward access channel state sent from the radio network controller; or
deactivating the high order modulation for the user equipment in the cell forward access channel state if the base station receives a cell reconfiguration request message not including the high order modulation activation indication for the user equipment in the cell forward access channel state sent from the radio network controller; or
deactivating the high order modulation for the user equipment in the cell forward access channel state if the base station receives a physical shared channel reconfiguration request message including a high order modulation deactivation indication for the user equipment in the cell forward access channel state sent from the radio network controller; or
deactivating the high order modulation for the user equipment in the cell forward access channel state if the base station receives a physical shared channel reconfiguration request message not including the high order modulation activation indication for the user equipment in the cell forward access channel state sent from the radio network controller; or
deactivating the high order modulation for the user equipment in the cell forward access channel state if the base station receives a common transport channel reconfiguration request message including a high order modulation deactivation indication for the user equipment in the cell forward access channel state sent from the radio network controller; or
deactivating the high order modulation for the user equipment in the cell forward access channel state if the base station receives a common transport channel reconfiguration request message not including the high order modulation activation indication for the user equipment in the cell forward access channel state sent from the radio network controller.

21. The method according to claim 15, **characterized in that** after activating the high order modulation according to the preconfigured activation means, the method further comprises:
deactivating the high order modulation after an enhanced dedicated transport channel absolute grant channel (E-AGCH) explicit resource release indication is sent to the user equipment; or
deactivating the high order modulation after receiving an implicit resource release indication having zero scheduling information sent from the user equipment.

22. A base station, **characterized in** comprising:
a receiving unit configured to receive a high order modulation activation indication sent from a radio network controller;
a judgment unit configured to determine whether high order modulation is supported by a user equipment in a cell forward access channel state; and
an activation unit configured to activate the high order modulation according to a preconfigured activation means if it is determined by the judgment unit that the high order modulation is supported by the user equipment in the cell forward access channel state, so as to transmit a modulation mode indication in downlink data transmission according to a high speed physical downlink shared control channel mode corresponding to the high order modulation activation.

23. The base station according to claim 22, **characterized in that** the base station further comprises:
a report unit configured to report capability information of supporting configuration of the high order modulation for the user equipment in the cell forward access channel state to the radio network controller through one of an audit message and a resource status indication message.

24. The base station according to claim 22, **characterized in that** the base station further comprises:
a configuration unit configured to, when a high order modulation configuration indication sent from the radio network controller is received by the receiving unit, determine whether to configure the high order modulation for the user equipment supporting the cell forward access channel state according to a configuration policy configured by the current NodeB.

25. The base station according to claim 24, **characterized in that** the configuration unit is particularly configured to, when it is determined to configure the high order modulation for the user equipment in the cell forward access channel state, notify the radio network controller that the base station currently determines to configure the high order modulation for the user equipment in the cell forward access channel state through any one of a cell setup response message, a cell reconfiguration response message, a physical shared channel reconfiguration response message, and a common transport channel setup response message.

26. The base station according to claim 22, **characterized in that** the activation unit is particularly configured to:
activate the high order modulation directly; or
activate the high order modulation after receiving one of a high speed downlink shared channel-dedicated physical control channel (HS-DPCCH) feedback and a channel quality indicator (CQI) feedback sent from the user equipment; or
activate the high order modulation after sending an enhanced dedicated transport channel absolute grant channel (E-AGCH) for conflict detection to the user equipment.

27. The base station according to claim 22, **characterized in that** the base station further comprises:
a first deactivation unit configured to deactivate the high order modulation for the user equipment in the cell forward access channel state if the receiving unit receives any one of: a high speed downlink shared channel data frame type 2 including a connection frame number indication and not including a high order modulation activation indication sent from the radio network controller; a high speed downlink shared channel data frame type 2 including a connection frame number indication and including a high order modulation deactivation indication sent from the radio network controller; a cell reconfiguration request message including a high order modulation deactivation indication for the user equipment in the cell forward access channel state sent from the radio network controller; a cell reconfiguration request message not including the high order modulation activation indication for the user equipment in the cell forward access channel state sent from the radio network controller; a physical shared channel reconfiguration request message including a high order modulation deactivation indication for the user equipment in the cell forward access channel state sent from the radio network controller; a physical shared channel reconfiguration request message not including the high order modulation activation indication for the user equipment in the cell forward access channel state sent from the radio network controller; a common transport channel reconfiguration request message including a high order modulation deactivation indication for the user equipment in the cell forward access channel state sent from the radio network controller; and a common transport channel reconfiguration request message not including the high order modulation activation indication for the user equipment in the cell forward access channel state sent from the radio network controller.

28. The base station according to claim 22, **characterized in that** the base station further comprises:
a second deactivation unit particularly configured to:
deactivate the high order modulation after the high order modulation is activated by the activation unit according to the preconfigured activation means and an enhanced dedicated transport channel absolute grant channel (E-AGCH) explicit resource release indication is sent to the user equipment; or
deactivate the high order modulation after an implicit resource release indication having zero scheduling information sent from the user equipment is received by the receiving unit.

29. A high order modulation activation method for user equipment in a cell forward access channel state, the method being used in user equipment, **characterized in** comprising:
receiving a high order modulation activation indication sent from a radio network controller;
activating high order modulation according to a preconfigured activation means;
receiving high speed downlink shared channel-dedicated physical control channel (HS-PDSCH) sent from a base station; and
performing corresponding demodulation according to a data packet modulation mode corresponding to the HS-PDSCH channel.

30. The method according to claim 29, **characterized in that**, before receiving the high order modulation activation indication sent from the radio network controller, the method further comprises:
reporting capability information of supporting the high order modulation to the radio network controller through UL transmission signaling, wherein the UL transmission signaling comprises any one of: an user equipment capability message, intra cell handover message, a radio resource control (RRC) connection setup message, a cell update message, and a universal mobile telecommunications system terrestrial radio access network registration area (URA) update message.

31. The method according to claim 29, **characterized in that** the activating the high order modulation according to the preconfigured activation means comprises:
activating the high order modulation directly; or
activating the high order modulation after sending one of a high speed dedicated physical control channel (HS-DPCCH) feedback and a channel quality indicator (CQI) feedback to the base station; or
activating the high order modulation after receiving an enhanced dedicated transport channel absolute grant channel (E-AGCH) for conflict detection sent from the base station.

32. The method according to claim 29, **characterized in that**, the method further comprises:
deactivating the high order modulation if reconfiguration signaling not including the high order modulation activation indication sent from the radio network controller is received; or
deactivating the high order modulation if reconfiguration signaling including a high order modulation deactivation indication sent from the radio network controller is received; or
deactivating the high order modulation if a system broadcast message not including an indication of supporting the high order modulation in the cell forward access channel state sent from the radio network controller is received.

33. The method according to claim 29, **characterized in that** after activating the high order modulation according to the preconfigured activation means, the method further comprises:
deactivating the high order modulation after an enhanced dedicated transport channel absolute grant channel (E-AGCH) explicit resource release indication sent from the base station is received; or
deactivating the high order modulation after sending an implicit resource release indication with zero scheduling information to the NodeB and receiving an acknowledgement (ACK).

34. A user equipment, **characterized in** comprising:
a receiving unit configured to receive a high order modulation activation indication sent from a radio network controller; and
an activation unit configured to activate high order modulation according to a preconfigured activation means, receive high speed downlink shared channel-dedicated physical control channel (HS-PDSCH) sent from a base station, and perform corresponding demodulation according to a data packet modulation mode corresponding to the HS-PDSCH channel.

35. The user equipment according to claim 34, **characterized in that** the user equipment further comprises:
a report unit configured to report capability information of supporting the high order modulation to the radio network controller through uplink transmission signaling, wherein the uplink transmission signaling comprises any one of: an user equipment capability message, an intra cell handover message, a radio resource control (RRC) connection setup message, a cell update message, and a universal mobile telecommunications system terrestrial radio access network registration area (URA) update message.

36. The user equipment according to claim 34, **characterized in that** the activation unit is particularly configured to:
activate the high order modulation directly; or
activate the high order modulation after sending one of a high speed dedicated physical control channel (HS-DPCCH) feedback and a channel quality indicator (CQI) feedback to the base station; or
activate the high order modulation after receiving an enhanced dedicated transport channel absolute grant channel (E-AGCH) for conflict detection sent from the base station.

37. The user equipment according to claim 34, **characterized in that** the user equipment further comprises:
a first deactivation unit configured to: deactivate the high order modulation after reconfiguration signaling not including the high order modulation activation indication sent from the radio network controller is received; or deactivate the high order modulation after reconfiguration signaling including a high order modulation deactivation indication sent from the radio network controller is received; or deactivate the high order modulation after a system broadcast message not including an indication of supporting the high order modulation in the cell forward access channel state sent from the radio network controller is received.

38. The user equipment according to claim 34, **characterized in that** the user equipment further comprises:
a second deactivation unit configured to: deactivate the high order modulation after the high order modulation is activated by the activation unit according to the preconfigured activation means and an enhanced dedicated transport channel absolute grant channel (E-AGCH) explicit resource release indication sent from the NodeB is received; or deactivate the high order modulation after sending an implicit resource release indication with zero scheduling information to the base station and receiving an acknowledgement (ACK).
